# EUROPÄISCHE PATENTSCHRIFT

(11) **EP 0 897 212 B1**
(45) Veröffentlichungstag und Bekanntmachung des Hinweises auf die Patenterteilung: **12.01.2005**
(21) Anmeldenummer: 98113613.8
(22) Anmeldetag: 21.07.1998
(51) Int. Cl.: H02K 23/24, H02K 23/42

(54) **Reihenschlussmotor**
Series motor
Moteur série

(30) Priorität: 13.08.1997 DE 19734958
(43) Veröffentlichungstag der Anmeldung: 17.02.1999
(73) Patentinhaber: C. & E. Fein GmbH, 73529 Schwäbisch-Gmünd-Bargau (DE)
(72) Erfinder: Meyer, Christoph, 70599 Stuttgart (DE)
(74) Vertreter: Gahlert, Stefan, Dr.-Ing.

(56) Entgegenhaltungen:
- EP-A- 0 029 462
- DE-A- 3 929 556
- US-A- 4 616 150

## Beschreibung

Die Erfindung betrifft einen Reihenschlußmotor mit Kommutator und Wendepolwicklung, insbesondere für ein gebremstes Elektrowerkzeug mit Universalmotor, mit einem Stator, der ein Statorblechpaket aufweist, das ein geschlossenes Joch bildet, mit mindestens zwei Feldwicklungen und mindestens einer Wendepolwicklung, die in Nuten des Statorblechpaketes eingelegt sind.

Ein derartiger Motor ist beispielsweise aus der EP 0 471 038 B1 bekannt.

Der bekannte Motor läßt sich zwischen Motor- und Bremsbetrieb umschalten, wobei Wendepolwicklungen vorgesehen sind, die im Bremsbetrieb eine schnelle Kurzschlußbremsung durch eigenständige Selbsterregung ermöglichen.

Ein Reihenschlußmotor ähnlicher Bauart ist aus der DE 43 07 357 A1 bekannt.

Den bekannten Motoren ist gemeinsam, daß die Wendepolwicklungen in Nuten des Statorblechpaketes eingelegt sind, wobei die Wicklungspakete mit ihren axialen Enden jeweils über das Statorblechpaket hinaus vorstehen. Da in der Regel die Feldwicklungen um die Wendepolwicklungen herumgeführt sind, führt dies zu einer Vergrößerung der Baugröße, da die größeren Feldwicklungspakete auf den aus den Statorblechpaketen hervorstehenden Wicklungsenden der Wendepolwicklungen aufliegen.

Insbesondere bei Universalmotoren, die in Elektrowerkzeugen eingesetzt werden, ist jedoch die Baugröße eines Motors bei einer bestimmten vorgegebenen Leistung ein entscheidender Parameter. Bereits eine Verlängerung des Motors nur um wenige Millimeter wird als außerordentlich nachteilig angesehen.

Der Erfindung liegt demnach die Aufgabe zugrunde, einen Reihenschlußmotor gemäß der eingangs genannten Art derart zu verbessern, daß bei gleichbleibender Leistung eine kleinere Baugröße, insbesondere ein in Axialrichtung verkürzter Stator, erreicht werden kann.

Erfindungsgemäß wird diese Aufgabe bei einem Reihenschlußmotor gemäß der eingangs genannten Art dadurch erreicht, daß das Statorblechpaket im Bereich der axialen Enden der mindestens einen Wendepolwicklung quer zur Axialrichtung des Stators verlaufende Aussparungen zur Aufnahme der Wicklungsenden der mindestens einen Wendepolwicklung aufweist.

Die Aufgabe der Erfindung wird auf diese Weise vollkommen gelöst, da die axialen Enden einer jeden Wendepolwicklung nunmehr durch die in Querrichtung verlaufenden Aussparungen zur benachbarten Nut hindurchgeführt werden können, so daß ein Überstehen der axialen Enden der Wendepolwicklungen über die Stirnflächen des Statorblechpaketes hinaus vermieden oder verringert werden kann.

Dies hat eine Verkürzung der Baugröße des Motors in Axialrichtung zur Folge, was zum Beispiel bei einem Universalmotor üblicher Baugröße an jedem Ende eine Verkürzung von etwa 5 mm bedeutet, also insgesamt zu einer Verkürzung um etwa 1 cm führt, was als erheblicher Vorteil anzusehen ist.

Es wurde festgestellt, daß diese Aussparungen zu keiner Leistungsverminderung und zu keiner Verschlechterung des Bremsverhaltens im Bremsbetrieb führen.

Gemäß einer Weiterbildung der Erfindung ist hierbei die Wendepolwicklung um ein Polhorn geführt, das an seinen beiden axialen Enden verkürzt ist. Somit läßt sich auf besonders einfache Weise erreichen, daß die axialen Enden der Wendepolwicklung nicht über die Stirnflächen des Statorblechpaketes hinaus hervorstehen oder nur so unwesentlich hervorstehen, daß die axiale Baulänge nicht nachteilig beeinflußt wird, da die Enden der Feldwicklungen ohnehin mit einem gewissen Radius verlaufen.

Gemäß einer weiteren Ausgestaltung der Erfindung ist das Statorblechpaket an seinen beiden Stirnflächen durch Bleche abgeschlossen, deren Querschnitt dem Querschnitt der übrigen Bleche ohne Aussparungen entspricht.

Auf diese Weise läßt sich eine Veränderung der Statorbleche an den axialen Enden vollständig vermeiden, da die in Axialnuten aufgenommenen Wicklungsschenkel einer jeweiligen Wendepolwicklung in Querrichtung über Quernuten miteinander verbunden sind, die nach außen, zum axialen Ende hin jeweils wieder durch einen Querschnitt abgedeckt sind, der dem Querschnitt des betreffenden Polhorns in der Mitte des Statorblechpaketes entspricht, das nicht von Aussparungen unterbrochen ist.

Gemäß einer weiteren Ausführung der Erfindung ist die Wendepolwicklung mit einem Wicklungsschenkel in eine Nut zwischen beiden Polhörnern eines Pols eingelegt und mit ihrem anderen Wicklungsschenkel in eine zwischen einem Polhorn und dem Joch gebildete Nut eingelegt, wobei die Feldwicklung dieses Pols mit einem Wicklungsschenkel über dem Wicklungsschenkel der Wendepolwicklung verläuft.

Bei dieser Ausführung ist vorteilhaft in jeden Pol ein Wendepol integriert, der zweckmäßigerweise von der Polmitte aus etwas in Laufrichtung versetzt ist, um eine optimale Wirkung zu erzeugen. Mit dieser Ausführung läßt sich eine gute Bremswirkung bei verkleinerter Baugröße und gleichbleibender Leistung gewährleisten.

Es versteht sich, daß die vorstehend genannten und die nachstehend noch zu erläuternden Merkmale der Erfindung nicht nur in der jeweils angegebenen Kombination sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen Teilquerschnitt durch einen erfindungsgemäßen Motor;
- Fig. 2: eine perspektivische Ansicht einer Hälfte eines in Längsrichtung geteilten Statorblechpaketes mit je einer eingelegten Wendepolwicklung und Feldwicklung;
- Fig. 3: eine Aufsicht auf den Stator gemäß Fig. 2 im Bereich der eingelegten Wendepolwicklung, jedoch ohne Feldwicklung; und
- Fig. 4: eine Aufsicht auf den Stator gemäß Fig. 2 im Bereich der eingelegten Wendepolwicklung, jedoch in einer leicht gegenüber Fig. 2 abgewandelten Ausführung.

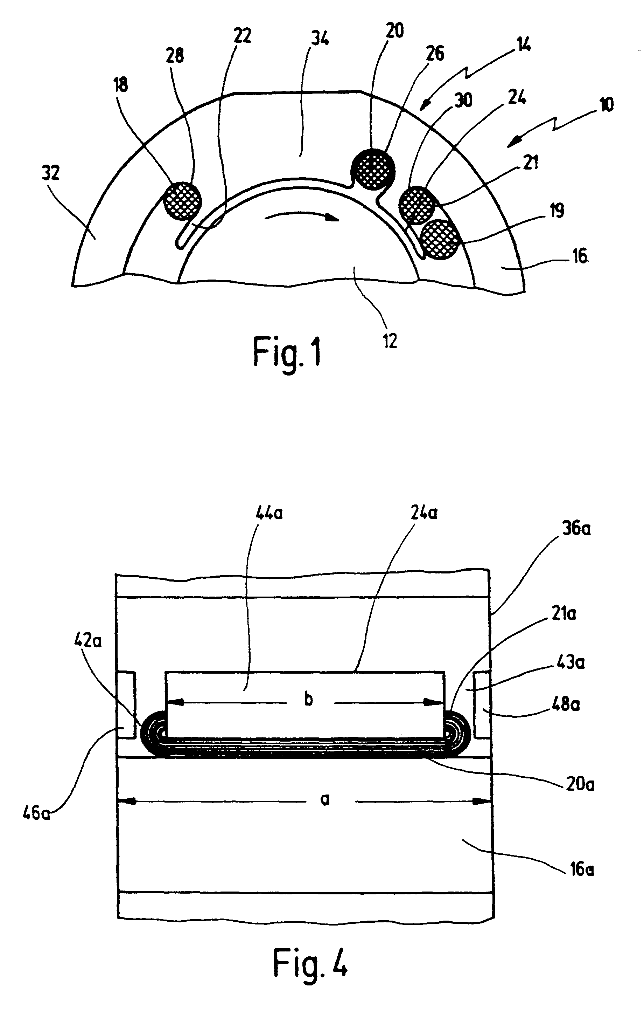

In Fig. 1 ist ein erfindungsgemäßer Reihenschlußmotor insgesamt mit der Ziffer 10 bezeichnet. Der Reihenschlußmotor 10 umfaßt einen Stator 14 mit einem Statorblechpaket 16, das vorzugsweise in Axialrichtung zweigeteilt ausgeführt ist (nicht dargestellt) und ein magnetisch geschlossenes Joch 32 bildet.

Der Rotor 12 ist in Fig. 1 lediglich rein schematisch angedeutet.

Der Reihenschlußmotor 10 umfaßt zwei einander gegenüberliegende, symmetrisch ausgebildete Pole, von denen in Fig. 1 lediglich ein Pol 34 dargestellt ist.

Der Pol 34 ist nach beiden Seiten hin durch Polhörner 22, 24 abgeschlossen, wobei zwischen den Polhörnern 22, 24 und dem äußeren Joch 32 Nuten 28 bzw. 30 gebildet sind, in denen Wicklungen aufgenommen sind.

Dabei ist zwischen dem in Fig. 1 rechten Polhorn 24 und dem linken Polhorn 22 in Drehrichtung des Motors versetzt eine weitere Nut 26 zur Aufnahme eines Wicklungsschenkels 20 einer Wendepolwicklung vorgesehen. Die Wendepolwicklung 20, 21 verläuft mit ihrem einen Schenkel 20 also in der Nut 26 und mit ihrem anderen Schenkel 21 unmittelbar in der zwischen Polhorn 24 und Joch 32 gebildeten Nut 30.

Die Feldwicklung des Pols 34 verläuft mit ihrem einen Wicklungsschenkel 18 in der zwischen dem Polhorn 22 und dem Joch 32 gebildeten Nut 28 und mit ihrem anderen Wicklungsschenkel 19 in der zwischen dem anderen Polhorn 24 und dem Joch 32 gebildeten Nut 30 und liegt mit diesem Wicklungsschenkel an dem betreffenden Wicklungsschenkel 21 der Wendepolwicklung 20, 21 an.

Erfindungsgemäß weist das Statorblechpaket 16 einen speziellen Aufbau auf, der es ermöglicht, die Wendepolwicklung 20, 21 weitgehend versenkt innerhalb des Statorblechpaketes 16 aufzunehmen, so daß die axialen Enden der Wendepolwicklung 20, 21 nicht oder nur unwesentlich über die axialen Enden des Statorblechpaketes 16 hinaus vorstehen.

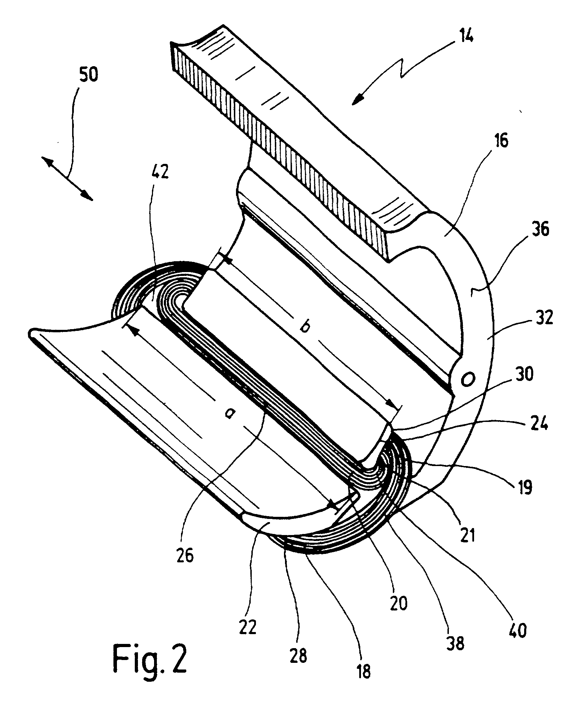

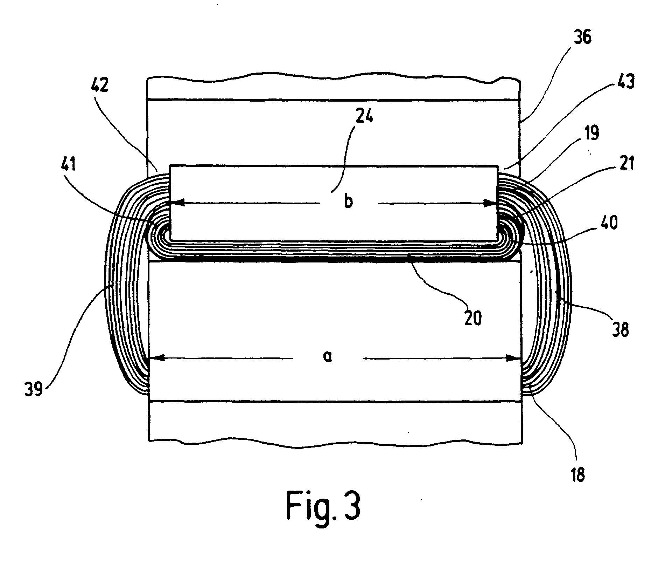

Dieser Aufbau ist aus Fig. 2 und Fig. 3 näher ersichtlich.

In Fig. 2 ist eine Hälfte des in Fig. 1 dargestellten, in Axialrichtung geteilten Stators 14 perspektivisch dargestellt, wobei die Abmessungen nicht absolut maßstabsgetreu sind, so daß etwaige Unterschiede zwischen Fig. 1 und Fig. 2 nicht beabsichtigt, sondern lediglich eine Folge der unterschiedlichen Darstellungsarten sind. Vom Joch 32 des Statorblechpaketes 16 aus stehen, wie zuvor anhand von Fig. 1 erläutert, das eine Polhorn 22, um das der eine Schenkel 18 der Feldwicklung geführt ist, und das andere Polhorn 24, um das ein Schenkel 21 der Wendepolwicklung und der zweite Schenkel 19 der Feldwicklung geführt ist, nach innen hervor. Die dem Rotor 12 zugewandten Flächen der Polhörner 22, 24 sind in bekannter Weise der Kreisform des Rotors 12 angepaßt, um die Luftspaltverluste so gering wie möglich zu halten.

In Fig. 2 ist die in Axialrichtung 50 des Stators 14 verlaufende Nut 26 erkennbar, in die ein Schenkel 20 der Wendepolwicklung 20, 21 eingelegt ist.

Erfindungsgemäß ist nun das Polhorn 24, um das die Wendepolwicklung und die Feldwicklung jeweils mit einem Schenkel 21 bzw. 19 geführt sind, in Axialrichtung 50 verkürzt, wie insbesondere aus der Darstellung gemäß Fig. 3 erkennbar ist, die eine Aufsicht auf eine Hälfte des Stators gemäß Fig. 2 von oben zeigt.

Während die Axiallänge des Statorblechpaketes 16 die Länge a beträgt, weist das Polhorn 24, um das herum der eine Schenkel 21 der Wendepolwicklung und der eine Schenkel 19 der Feldwicklung geführt sind, eine kleinere Axiallänge b auf. Die Länge b ist nun so bemessen, daß die Wendepolwicklung 20, 21 mit ihren axialen Enden 40, 41 jeweils um das Ende des Polhorns 24 herumgeführt werden kann, ohne daß die axialen Enden 40, 41 über die Stirnflächen 36 des Statorblechpaketes 16 hinaus hervorstehen. Die Wendepolwicklung 20, 21 wird somit mit ihren axialen Enden also in etwa bündig innerhalb des Statorblechpaketes 16 aufgenommen bzw. steht leicht nach außen hervor, da die Feldwicklung ohnehin in einem Radius verläuft und nicht genau an den Stirnflächen anliegt.

Wie aus Fig. 2 und Fig. 3 ersichtlich, ist nunmehr die Feldwicklung 18, 19 jeweils mit ihren axialen Enden 38, 39 um die axialen Enden 40, 41 der Wendepolwicklung 20, 21 herumgeführt und kann, da die Wendepolwicklung 20, 21 innerhalb des Statorblechpaketes 16 weitgehend versenkt aufgenommen ist, mit den jeweiligen Enden 38 ihres Wicklungspaketes so kurz wie möglich gehalten werden.

Im Vergleich zu herkömmlichen Reihenschlußmotoren, bei denen die axialen Enden der Wendepolwicklungen über die jeweiligen Stirnflächen des Statorblechpaketes hinaus hervorstehen, wird erfindungsgemäß bei einer üblichen Ausführung als Universalmotor eine Verkürzung der axialen Baulänge an jedem Ende um etwa 5 mm, also um insgesamt etwa 10 mm, erreicht.

Dabei wurde in Tests festgestellt, daß damit keinerlei Leistungseinbuße verbunden ist und auch die Bremswirkung gleichermaßen erhalten bleibt.

Die Lehre der Erfindung läßt sich vorteilhaft bei Reihenschlußmotoren unterschiedlicher Bauart verwenden, etwa bei dem Motor gemäß der eingangs erwähnten EP 0 471 038 B1 oder bei dem Motor gemäß der deutschen Patentanmeldung 196 51 298.0, die jedoch nicht vorveröffentlicht ist. Bei dem erstgenannten Motor handelt es sich um einen Stromwendermotor im Reihenschluß mit Wendepolen, sowie mit Schalteinrichtungen zur Umschaltung zwischen Motor- und Bremsbetrieb, wobei im Bremsbetrieb der Motor mittels der Schalteinrichtung kurzgeschlossen und die Feldwicklung umgepolt wird, und mit Mitteln zur Begrenzung des Bremsstromes durch die Feldwicklung, mit denen bei Wechselstrombetrieb eine sanfte und schnelle Kurzschlußbremsung durch eigenständige Selbsterregung durchgeführt werden kann. Hierzu ist der Anker in der Motorbetriebsphase zwischen der Feldwicklung und der Wendepolwicklung geschaltet, während in der Bremsphase zur Begrenzung des Bremsstroms durch die Feldwicklung ein Strompfad zwischen dem Anker und der Wendepolwicklung geschaltet wird, der die Mittel zur Begrenzung des Bremsstromes enthält, so daß nur ein vorbestimmter Anteil des Bremsstroms über die Feldwicklung fließt. Zur Begrenzung des Bremsstromes sind zueinander antiparallel geschaltete Zenerdioden vorgesehen.

Bei der nachfolgend erwähnten, noch nicht veröffentlichten deutschen Patentanmeldung 196 51 298.0 weist der Reihenschlußmotor mindestens eine mit einer Ankerwicklung in Reihe geschältete Feldwicklung sowie mindestens eine Wendepolwicklung zur Bremsung des Motors im Bremsbetrieb auf, sowie eine Schalteinrichtung zur Umschaltung des Motors zwischen Bremsbetrieb und Motorbetrieb. Die mindestens eine Bremswicklung ist in einem separaten Strompfad angeordnet, der nur im Bremsbetrieb aktiviert ist. Der separate Strompfad ist über die Schalteinrichtung entweder im Bremsbetrieb parallel zur Ankerwicklung geschaltet oder aber im Bremsbetrieb über die Schalteinrichtung im Nebenschluß an die Speisespannung gekoppelt.

Unabhängig von der Schaltung des betreffenden Reihenschlußmotors läßt sich die erfindungsgemäße Lehre also vorteilhaft verwenden, um eine verkürzte Baulänge des Stators zu erreichen.

Es versteht sich, daß die Erfindung auch bei anderen Ausführungen verwendet werden kann, z.B. bei einem Reihenschlußmotor gemäß der DE 43 07 357 A1.

Eine Variante der Ausführung gemäß Fig. 2 und 3 ist in Fig. 4 dargestellt.

Fig. 4 zeigt eine Aufsicht auf eine Hälfte des Stators gemäß Fig. 2 von oben, wobei das Polhorn 24a etwas gegenüber dem Polhorn 24 gemäß Fig. 3 abgewandelt ist. Wiederum ist das Polhorn 24a an seinen beiden Enden verkürzt, wie durch die Länge b angedeutet ist. Im Unterschied zu der Ausführung gemäß Fig. 3 ist jedoch das Statorblechpaket 16a an den beiden axialen Enden durch Bleche abgeschlossen, deren Querschnitt vollständig dem Blechquerschnitt im mittleren Bereich entspricht, bei dem keine Aussparungen 42a bzw. 43a vorgesehen sind, durch die die Enden der Wendepolwicklung 20a, 21a querverlaufen.

Das Polhorn 24a weist somit einen mittleren Bereich 44a der Länge b auf, der an beiden axialen Enden durch die Aussparung 42a bzw. 43a in Form einer Quernut von jeweils einem Endbereich 46a bzw. 48a getrennt ist, dessen Querschnitt dem Querschnitt des Polhorns 24a im mittleren Bereich 44a entspricht.

Das Polhorn 24a ist also somit an seinen beiden Enden lediglich durch Quernuten unterbrochen.

Die Wendepolwicklung 20a, 21a liegt dabei wie bei der Ausführung gemäß Fig. 2 mit ihren Schenkeln 20a bzw. 21a in den in Axialrichtung verlaufenden Nuten und verläuft mit ihren axialen Enden durch die Aussparungen 42a bzw. 43a, die als Quernuten ausgeführt sind.

## Patentansprüche

1. Reihenschlußmotor mit Kommutator und Wendepolwicklung, insbesondere für ein gebremstes Elektrowerkzeug mit Universalmotor, mit einem Stator (14), der ein Statorblechpaket (16; 16a) aufweist, das ein geschlossenes Joch (32) bildet, mit mindestens zwei Feldwicklungen (18, 19) und mindestens einer Wendepolwicklung (20, 21; 20a, 21a), die in Nuten (26, 28, 30) des Statorblechpaketes (16; 16a) eingelegt ist, **dadurch gekennzeichnet, daß** das Statorblechpaket (16; 16a) im Bereich der axialen Enden (40, 41) der mindestens einen Wendepolwicklung (20, 21; 20a, 21a) quer zur Axialrichtung (50) des Stators (14) verlaufende Aussparungen (42; 42a, 43a) zur Aufnahme der Wicklungsenden der mindestens einen Wendepolwicklung (20, 21; 20a, 21a) aufweist.

2. Reihenschlußmotor nach Anspruch 1, **dadurch gekennzeichnet, daß** die Aussparungen (42; 42a, 43a) derart ausgebildet sind, daß die axialen Enden (40, 41) der Wendepolwicklung (20, 21; 20a, 21a) nicht oder nur unwesentlich über die Stirnflächen (36; 36a) des Statorblechpaketes (16, 16a) hervorstehen.

3. Reihenschlußmotor nach Anspruch 1 oder 2, **dadurch gekennzeichnet, daß** die Wendepolwicklung (20, 21) um ein Polhorn (24) geführt ist, daß an seinen beiden axialen Enden verkürzt ist.

4. Reihenschlußmotor nach einem der vorhergehenden Ansprüche, **dadurch gekennzeichnet, daß** das Statorblechpaket an seinen beiden Stirnflächen (36a) durch Bleche abgeschlossen ist, deren Querschnitt dem Querschnitt der übrigen Bleche ohne Aussparungen (42a, 42b) entspricht.

5. Reihenschlußmotor nach einem der vorhergehenden Ansprüche, **dadurch gekennzeichnet, daß** die Wendepolwicklung (20, 21; 20a, 21a) mit einem Wicklungsschenkel (20; 20a) in eine Nut (26) zwischen beiden Polhörnern (22, 24) eines Pols (34) eingelegt ist und mit ihrem anderen Wicklungsschenkel (21; 21a) in eine zwischen einem Polhorn und dem Joch (32) gebildete Nut (30) eingelegt ist, wobei die Feldwicklung (18, 19) dieses Pols (34) mit einem Wicklungsschenkel (19) über dem Wicklungsschenkel (21; 21a) der Wendepolwicklung (20, 21; 20a, 21a) verläuft.

## Claims

1. A series motor with a commutator and commutating winding, in particular for a braked power tool with a universal motor, having a stator (14) which has a stator plate bundle (16, 16a) that forms a closed yoke (32), having at least two field windings (18, 19) and at least one commutating winding (20, 21; 20a, 21a), which is laid into grooves (26, 28, 30) of the stator plate bundle (16; 16a), **characterized in that** the stator plate bundle (16; 16a) has, in the region of the axial ends (40, 41) of the at least one commutating winding (20, 21; 20a, 21a), cutouts (42; 42a, 43a) running transversely to the axial direction (50) of the stator (14) for receiving the ends of the at least one commutating winding (20, 21; 20a, 21a).

2. The series motor as defined in claim 1, **characterized in that** the cutouts (42; 42a, 43a) are configured such that the axial ends (40, 41) of the commutating winding (20, 21; 20a, 21a) project not at all or only insignificantly beyond the end surfaces (36; 36a) of the stator plate bundle (16, 16a).

3. The series motor as defined in claim 1 or 2, **characterized in that** the commutating winding (20, 21) is guided around a pole horn (24) which is shortened at its two axial ends.

4. The series motor as defined in one of the foregoing claims, **characterized in that** the stator plate bundle is terminated at its two end surfaces (36a) by plates whose cross section corresponds to the cross section of the remaining plates without cutouts (42a, 42b).

5. The series motor as defined in one of the foregoing claims, **characterized in that** the commutating winding (20, 21; 20a, 21a) is laid with one winding limb (20; 20a) into a groove (26) between the two pole horns (22, 24) of one pole (34), and with its other winding limb (21; 21a) is laid into a groove (30) formed between one pole horn and the yoke (32), the field winding (18, 19) of that pole (34) extending with one winding limb (19) beyond the limb (21; 21a) of the commutating winding (20, 21; 20a, 21a).

## Revendications

1. Moteur en série avec commutateur et enroulement de commutation de pôle, en particulier pour un outil électrique freiné avec moteur universel, avec un stator (14) qui comporte un empilage de tôles de stator (16 ; 16a) qui forme une culasse fermée (32), avec au moins deux enroulements de champ (18, 19) et au moins un enroulement de commutation de pôle (20, 21 ; 20a, 21a) qui est inséré dans des rainures(26, 28, 30) de l'empilage de tôles de stator (16 ; 16a), **caractérisé en ce que** l'empilage de tôles de stator (16 ; 16a) comprend, dans la zone des extrémités axiales (40, 41) du au moins un enroulement de commutation de pôle (20, 21 ; 20a, 21a), des évidements (42 ; 42a, 43a) s'étendant transversalement à la direction axiale (50) du stator (14) pour le logement des extrémités d'enroulement du au moins un enroulement de commutation de pôle (20, 21 ; 20a, 21a).

2. Moteur en série selon la revendication 1, **caractérisé en ce que** les évidements (42 ; 42a, 43a) sont configurés de telle manière que les extrémités axiales (40, 41) de l'enroulement de commutation de pôle (20, 21 ; 20a, 21 a) ne débordent pas ou seulement de manière négligeable au-dessus des faces frontales (36 ; 36a) de l'empilage de tôles de stator (16 ; 16a).

3. Moteur en série selon la revendication 1 ou 2, **caractérisé en ce que** l'enroulement de commutation de pôle (20, 21) est guidé autour d'une corne polaire (24) qui est raccourcie à ses deux extrémités axiales.

4. Moteur en série selon l'une quelconque des revendications précédentes, **caractérisé en ce que** l'empilage de tôles de stator est obturé à ses deux faces frontales (36a) par des tôles dont la section transversale correspond à la section transversale des autres tôles sans évidements (42a, 42b).

5. Moteur en série selon l'une quelconque des revendications précédentes, **caractérisé en ce que** l'enroulement de commutation de pôle (20, 21 ; 20a, 21a) est inséré dans une rainure (26) entre les deux cornes polaires (22, 24) d'un pôle (34) avec une jambe d'enroulement (20 ; 20a) et est inséré dans une rainure (30) formée entre une corne polaire et la culasse (32) avec son autre jambe d'enroulement (21 ; 21a), l'enroulement de champ (18, 19) de ce pôle (34) s'étendant avec une jambe d'enroulement (19) par-dessus la jambe d'enroulement (21 ; 21a) de l'enroulement de commutation de pôle (20, 21 ; 20a, 21a).
